Europäisches Patentamt

(19) European Patent Office

Office européen des brevets

(11) Publication number: **0 010 774**
**B1**

(12) **EUROPEAN PATENT SPECIFICATION**

(45) Date of publication of patent specification: **25.05.83**

(51) Int. Cl.³: **G 01 S 3/42, H 01 Q 25/04**

(21) Application number: **79104305.2**

(22) Date of filing: **05.11.79**

(54) **Method of and system for tracking an object radiating a circularly or linearly polarized electromagnetic signal.**

(30) Priority: **06.11.78 IT 6954078**

(43) Date of publication of application:
**14.05.80 Bulletin 80/10**

(45) Publication of the grant of the patent:
**25.05.83 Bulletin 83/21**

(84) Designated Contracting States:
**DE FR GB**

(56) References cited:
**DE - A - 1 516 822**
**DE - A - 2 004 273**
**US - A - 3 383 688**
**US - A - 3 582 950**

**COMSAT TECHNICAL REVIEW, vol. 6, no. 2, Fall 1976, pages 253—283, Washington, U.S.A., D. F. DIFONZO et al.: "Adaptive polarisation control for satellite frequency reuse systems"**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Bielli, Paolo**
**Via Rossetti 68**
**Ciriè - Torino (IT)**
Inventor: **Savini, Dario**
**P.za Carducci, 161**
**Torino (IT)**
Inventor: **De Padova, Salvatore**
**Via Frejus, 10**
**Torino (IT)**

(74) Representative: **Riederer Freiherr von Paar zu Schönau, Anton**
**Müllerstrasse 31**
**D-8000 München 5 (DE)**

# Method of and system for tracking an object radiating a circularly or linearly polarized electromagnetic signal

The invention relates to a method of tracking an object radiating a circularly or linearly polarized electromagnetic signal by current re-adjustment of an antenna positioning to a pointing direction by means of correction signals, the antenna being located in the origin of a Cartesian orthogonal reference system having a first axis parallel to the horizontal plane, a second axis upward directed and a third axis coincident with the maximum sensitivity direction and the object position being determined by first and a second angular coordinates measured with respect to said third axis and to said first axis on the plane containing said first and second axes respectively, wherein the signals associated to the mode of propagation in guide TE21 are extracted by means of two pairs of longitudinal slots placed on two planes passing through the axis of the waveguide in which they are cut and forming together an angle of $\pi/4$, the plane passing through the first pair of slots defining a first angle with respect to a plane containing said first and third axis and wherein the signals relating to the slots of the same pair are first subtracted from one another.

It is known that, in order to communicate with a mobile automatic station, for instance a metereological satellite, a communications satellite or a space probe, the ground-station antenna must constantly point at the direction of the object in motion, following all its movements. To facilitate this task a radiowave generator, named radio-beacon, is placed aboard the automatic station; said radio-beacon, by constantly radiating an electromagnetic signal towards the different stations spread over the earth surface, allows them to position their antennas. This operation, generally referred to as "tracking", is automatically performed, so as to ensure at any time the best performances in the connection.

To this aim, the ground stations are equipped with autotrack systems allowing to keep the direction of maximum reception of the antennas coincident with the direction of the beacon placed aboard the satellite.

This requirement is to be met, not only when the satellite is in motion with respect to the earth (non-geostationary satellite), but also when it is in an orbit in which it ought to be fixed with respect to the earth (geostationary satellite). In fact the satellite is always under the gravitational forces exerted by the other celestial bodies of the solar system. The resultant of said forces causes an oscillation of the actual position of the satellite, around its nominal positions.

A radio-beacon tracking system must be able to detect these variations and therefore it must be able to send suitable "correction signals" to the motors which position the antenna both in azimuth and elevation. These signals are obtained by duly extracting and processing the information relative both to the dominant propagation mode in the waveguide of the antenna feed and to the higher mode or modes corresponding to the configurations of the electromagnetic field that are generated owing to the pointing error.

The propagating modes to be utilized as well as the processing methods depend on the kind of polarization of the electromagnetic wave transmitted by the radio beacon. In fact, in the satellites equipped with telecommunication apparatuses operating in the range of frequencies from 4 to 6 GHz, communications radio-beams as well as radio-beacon signals utilize circular polarization. A tracking system, which extracts the error signals from the propagation mode in the guide TM01, has been already developed from said satellites.

For satellites equipped with telecommunications apparatuses operating at frequencies higher than 10 GHz, the general trend is towards the use of signals radiated by linear polarization; for these signals the tracking system used so far for circularly-polarized radio-beacons is no longer valid.

The present requirement is for tracking systems valid for linear polarization only, or for both linear and circular polarization. Of course the latter systems are more requested as they can be utilized indifferently with ground antennas operating in networks of links via satellite with circularly or linearly polarized radio-beacon.

The tracking systems valid for both kinds of polarization known so far, can basically be grouped into two families: the first one comprises systems in which the error signals are obtained from information associated to several higher modes in addition to the dominant one; the second one comprises systems utilizing one higher mode only.

More particularly, the second family comprises systems utilizing the propagation mode in waveguide TE21.

The solutions utilizing higher modes are more complicated, because they require different kinds of mode couplers and because the processing necessary to extract error signals is more complicated; in addition the total adjustment of the equipment is more critical.

In the cases in which the tracking system utilizes the only mode TE21, problems arise from the fact that the direction of the electromagnetic field radiated by radio beacons with linear polarization is different in the various zones of the earth. The known technical solutions can face these difficulties by means of expensive and sophisticated methods of processing radio frequency signals.

It is known (US—A 3 383 688) to extract the two modes TE21, TE11 and combine them at a radio frequency level to obtain a tracking information. The respective arrangement must be provided with an appropriate coupler for mode TE11 or this mode is to be derived from magic tees. However, the evaluation of the correction signals depends on the slope of the polarization plane.

A tracking system for rotation of the coupler is also known (DE—A 1 516 822), the respective correction being possibly derived from TE11x and TE11y components.

A further method for tracking (US—A 3 582 950) uses the TE21 mode, a respective error signal being used to rotate a phase shifter in an interlocked manner.

Thereagainst, the invention is to solve the problem of tracking an object as defined above, for use for radio-beacons with circular or linear polarization, utilizing for tracking just one higher mode of propagation in the guide in order to extract the antenna positioning signals and solving in a simple manner the problem presented by the different orientation of the linearly polarized electromagnetic field at various points of the earth surface.

This problem is solved by the invention which is characterized in that the resulting difference signals having the expressions:

$$u_{1l} = -K_1 v \, \sin(\phi - 2\varphi + \alpha) \, \cos(\omega t + \delta)$$

$$u_{2l} = K_1 v \, \cos(\phi - 2\varphi + \alpha) \, \cos(\omega t + \delta)$$

in case of linear polarization, and

$$u_{1c} = -K_2 v \, \cos(\omega t + \phi - 2\varphi + \gamma)$$

$$u_{2c} = -K_2 v \, \sin(\omega t + \phi - 2\varphi + \gamma)$$

in case of circular polarization, where $\alpha$ is a second angle comprised between the polarization plane of the electromagnetic signal and the plane comprising said first and third axes (x,z), $K_1$ and $K_2$ are multiplicative constants, $\delta$ and $\gamma$ are reference phases, are, in case of circular polarization, directly utilized for a subsequent multiplication and, in case of linear polarization, are equally utilized after having made said first angle ($\varphi$) to be equal to half of said second angle ($\alpha$), and then the obtained signals are multiplied by a signal ($u_{rl}$, $u_{rc}$) having the expressions:

$$u_{rl} = \cos(\omega t + \delta)$$

in case of linear polarization and

$$u_{rc} = \cos(\omega t - 2\varphi + \pi/2 + \gamma)$$

in case of circular polarization where $\omega$ is the same frequency of said obtained signals, and the phase angle is made equal to that of the difference signals, apart from said second angular coordinate ($\phi$) in case of circular polarization by an initial adjustment, so obtaining correction signals ($u'_{1l}$, $u'_{2l}$, $u'_{1c}$, $u'_{2c}$) having the expressions:

$$u'_{1c} = -K'_2 v \, \sin\phi$$

$$u'_{2c} = K'_2 v \, \cos\phi$$

in case of circular polarization and

$$u''_{1l} = -K'_1 v \, \sin\phi$$

$$u''_{2l} = K'_1 v \, \cos\phi$$

in case of linear polarization, where $K'_1$ and $K'_2$ are multiplicative constants.

This method, besides solving the above problem, does not perturb the radio frequency chain where the information signal propagates and does not require any sophisticated radio frequency processing methods of the received signals, which could give arise to errors which can not be distinguished from the actual pointing errors. In short, to obtain the information on the pointing error, the two operations are necessary to make the angle of the diameter connection line of one pair of the slots to the reference plane equal to half of the slope angle comprised between the polarization plane and the reference plane, and to multiply the resulting signals by reference signals to convert them to a direct current signal proportional to the pointing error. For this, the propagation mode TE21 is utilized which is the only mode having an amplitude proportional to the pointing error. Mode TE11 may be used to compensate fading effects on the received signal and is used to determine the angle for a rotation of the converter.

Advantageous developments of the invention including the tracking system can be seen from the subclaims.

These and other characteristics of the present invention will become clearer from the following description of a preferred embodiment thereof, given by way of example and not in a limiting sense, taken in connection with the annexed drawings, in which:—

Fig. 1 is a representation of the reference system as well as of the geometric parameters defining the position of the radio-beacon and the polarization plane of the electrical field in case of communications in linear polarization;

Fig. 2 is a schematic representation of a system for extracting the information associated to mode TE21;

Fig. 3 is a block diagram of the tracking system object of the invention;

Fig. 4 is a detailed block diagram of the block denoted by EL in Fig. 3.

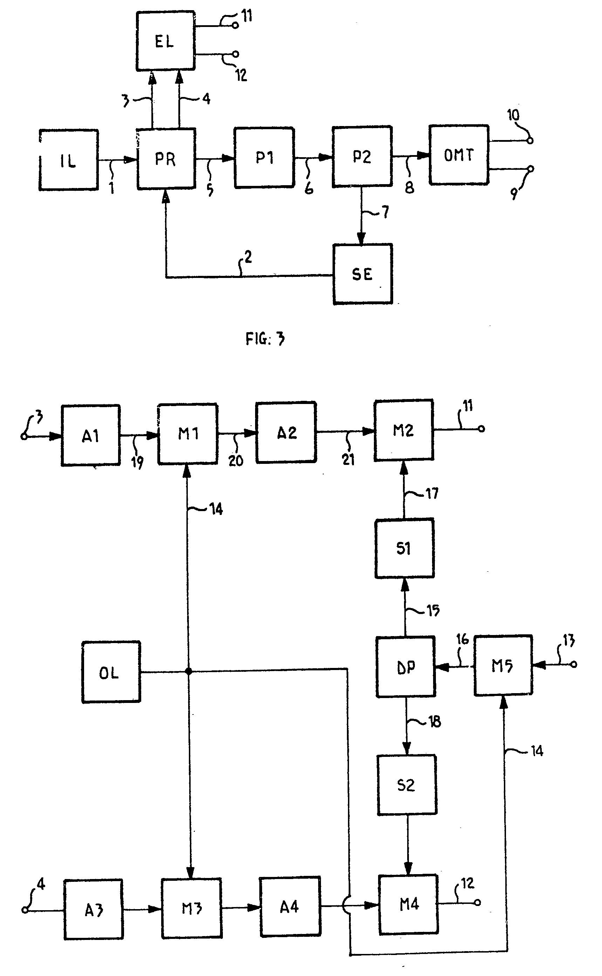

Fig. 1 is a perspective view of a reference system capable of defining the geometrical parameters identifying the instantaneous locations of the ground antenna and of the radio-beacon. These parameters are a necessary support to the following theoretical exposition on the basic principles giving rise to the methodology used for the tracking system.

References x, y, z denote the axes of an orthogonal Cartesian base, integral with the ground antenna located at the origin O; axes z coincides with the direction of maximum efficiency of the ground antenna.

This Cartesian base is associated to a base of spherical coordinates $\theta$ and $\Phi$ by means of which the angular position of the radio-beacon, denoted by P, becomes easier to be detected.

Angle $\theta$ is formed between axis z and segment OP, whereas angle $\Phi$ is formed by plane xz and plane OPO', where O' is the intersection point of axis z with the plane parallel to plane xy and passing through point P. The length of segment OP is not reported as it is negligible in the description of the system.

Reference E denotes the vector of the electric field radiated by the radio-beacon, in case of linear polarization; reference $\alpha$ denotes the angle comprised between the polarization plane of the electrical field and the plane parallel to plane xz and passing through point P. It is clear that the antenna pointing is perfect when point P is coincident with point O', that is when point P is along the direction of maximum reception of the antenna.

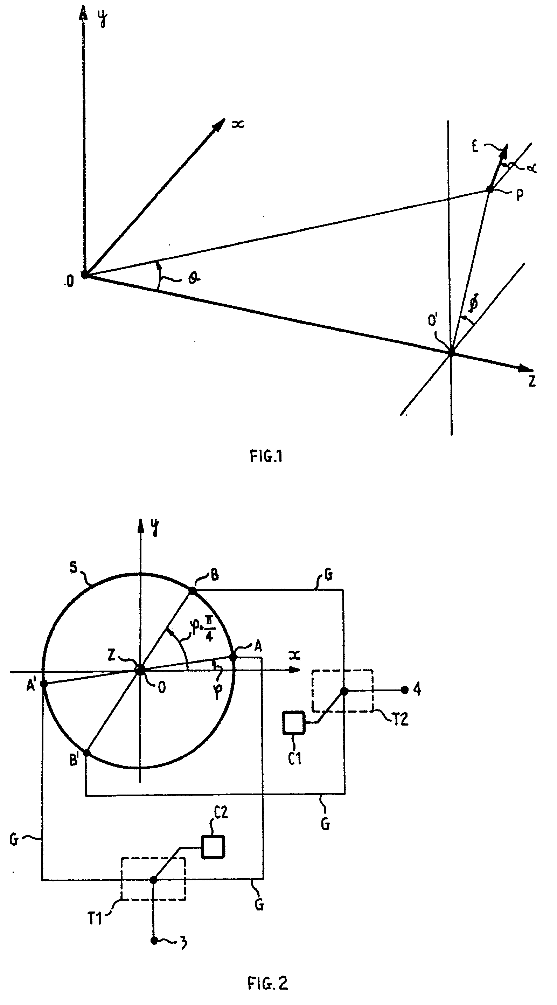

Fig. 2 is a schematic representation of an extracting system of the ground antenna. Said drawing shows the same orthogonal reference system x, y, z with axis z having the positive direction outgoing from the drawing plane.

Origin O of the reference system coincides with the centre of a section S of the circular waveguide of the antenna feed. It has a diameter that allows propagation of mode TE21, at the radio-beacon frequency. References A, A', B, B' denote four slots with their greater side parallel to the axis of the circular waveguide (axis z) from which also the information associated with the higher propagation mode TE21 is extracted. As previously mentioned, this mode is originated in the waveguide when the signal emitted by the radio-beacon is not in the nominal pointing direction of the ground antenna. Slots A and A', as well as slots B and B', are diametrically opposed with respect to the axis of the guide, so as to give rise to single pairs of slots. Pairs of slots A, A' and B, B' belong to planes passing through the axis of the waveguide forming an angle of $\pi/4$ between them, in addition, the plane of pair A, A' forms with plane xz a generic angle denoted by $\varphi$.

For practical reasons, the two pairs of slots A, A' and B, B' are cut in two different cross sections of the guide. However, the distance between these sections is such that from the electrical point of view there is no difference from the theoretical case in which the sections coincide, as they have been represented in the drawing.

Signals associated both to dominant mode TE11 and to the higher mode TE21 go out of the pairs of slots A, A', B, B'. By sending these signals two by two through waveguide G to two "magic T" circuits, T1 and T2, at the "difference" outputs 3 and 4, it is obtained for small angles $\theta$ two signals $u_{1l}$ and $u_{2l}$ (linear polarization), or $u_{1c}$ and $u_{2c}$ (circular polarization) relevant to the only mode TE21. Said pairs of signals are given by:

$$u_{1l} = -K_1\theta \sin(\Phi - 2\varphi + \alpha) \cos(\omega t + \delta)$$

$$u_{2l} = K_1\theta \cos(\Phi - 2\varphi + \alpha) \cos(\omega t + \delta)$$

1)

in case of linear polarization, and

$$u_{1c} = -K_2\theta \cos(\omega t + \Phi - 2\varphi + \gamma)$$

$$u_{2c} = -K_2\theta \sin(\omega t + \Phi - 2\varphi + \gamma)$$

2)

in case of circular polarization.

$K_1$ and $K_2$ are two usual multiplicative constants dependent on the extracting characteristics; $\delta$ and $\gamma$ are two generic reference phases.

Anologously, at the "sum" outputs of the two "magic T" circuits there is only the information associated to the dominant mode TE11. As this information is generally extracted before the radio-frequency preamplifier at the end of the feed system where the power level is higher, the "sum" outputs are terminated on two suitable loads C1 and C2 such that the extracting slots do not disturb the dominant propagation mode TE11.

The signals present at the "difference" outputs, as expressed by 1) and 2), are now multiplied by reference signals of the type:

$$u_{rl}=\cos(\omega t+\delta) \qquad\qquad 3)$$

in case of linear polarization, and

$$u_{rc}=\cos(\omega t-2\varphi+\pi/2+\gamma) \qquad\qquad 4)$$

in case of circular polarization.

Thus signals having the following expressions are obtained:

$$u'_{1l}=-K'_1\theta \ \sin(\Phi-2\varphi+\alpha)$$

$$\qquad\qquad 5)$$

$$u'_{2l}=K'_1\theta \ \cos(\Phi-2\varphi+\alpha)$$

for the linear polarization, and

$$u'_{1c}=-K'_2\theta \ \sin\Phi$$

$$\qquad\qquad 6)$$

$$u'_{2c}=K'_2\theta \ \cos\Phi$$

for the circular polarization.

$K'_1$ and $K'_2$ are multiplicative constants.

For the linear polarization, in case angle $\varphi$ takes the value:

$$\varphi=\frac{\alpha}{2} \qquad\qquad 7)$$

the signals of expressions 5 become:

$$u''_{1l}=-K'_1\theta \ \sin\Phi$$

$$\qquad\qquad 8)$$

$$u''_{2l}=K'_1\theta \ \cos\Phi$$

Expressions 6) and 8), for small values of $\theta$ and apart from a scale factor are the very Cartesian coordinates $x_P$ and $y_P$ of point P (Fig. 1) wherein the radio-beacon resides with respect to the orthogonal Cartesian base integral with the ground antenna (the coordinate $z_P$ denotes the distance of the ground station from the radio-beacon, thus it is not important in tracking problems). In addition, coordinates $x_P$ and $y_P$ represent the movements the antenna must undergo to make its maximum reception direction coincide with the radio beacon direction. Hereinafter these signals will be simply referred to as correction signals.

In case the polarization is not perfectly circular but slightly elliptical, the controls coming from the tracking system are still capable of directly driving the antenna to the pointing direction, without any oscillation about the correct position. On the contrary, in case the nominally linear polarization is slightly elliptical, the control signals may be purified from possible errors, as will be seen later in greater details.

From these theoretical statements, it can be derived that it is possible to realize a tracking system for radio-beacons having both linear and circular polarization, by only utilizing information associated to mode TE21, provided the signals are extracted from pairs of slots located on planes forming an angle of $\pi/4$ between them, and provided conditions 3) and 7) for linear polarization and condition 4) for circular polarization are satisfied.

The tracking system able to meet the described requirements is depicted as block diagram in Fig. 3. In the following description, reference will be made to the only operation in reception being the duality principle valid for the transmission. The radio beacon signal coming from the satellite affects the feed IL of the ground antenna and, through the portion of guide 1, it is sent to a block PR, basically realized as in Fig. 2.

It consists of a circular guide dimensioned to allow the propagation of higher mode TE21. On said guide two pairs of longitudinal slots are cut, belonging to the planes placed at $\pi/4$ from one another, as previously mentioned.

The axial distance between the pairs of slots is almost equal to $\lambda_g/2$, where $\lambda_g$ is the wavelength

0010774

in guide of mode TE21. By this method, as known, the two pairs of slots behave as though they were in the same section with respect to electromagnetic field configuration TE21. The resulting advantage is an easier positioning of the output guides.

The extracted signals are combined together by means of "magic T" circuits as previously described, and then they are transferred, already in the form reported in relationships 1) and 2), to the inputs of block EL of Fig. 3 through waveguides 3 and 4.

The signal associated to the dominant mode TE11 is transferred, by means of a transition between circular waveguides with different diameter 5, to a polarizer at 90°, denoted by P1 and then through guide 6, to a polarizer at 180° denoted by P2. The outgoing signal in guide 8 carries then at a mode transducer OMT, and is sent by means of port 9, to the subsequent stages of the receiver. Port 10 is the entrance for the signals coming from the transmitter.

The position of mode transducer OMT, being fixed with respect to the other blocks which are free to rotate about an axis coincident with the axes of the guides, is suitably chosen during the installation. More particularly, the direction of polarization of the signals present at ports 9 and 10 must be parallel to the directions of axes x and y of the reference system shown in Fig. 1. This reference system will be chosen so that the directions of axes x and y are coincident with the nominal directions of horizontal and vertical polarization associated to the radio-beacon.

Still in Fig. 3, in case the received signal has circular polarization, the polarizer at 90° P1, converts it into linear polarization, whereas in case of linear polarization, said polarizer must be placed so as not to affect the polarization direction of the signal.

As the input signal has now certainly a linear polarization, polarizer at 180° P2 causes the polarization direction of said input signal to recover again at the output to which guide 8 is connected, a direction coincident with that required at the input of mode transducer OMT. In this manner maximum power transfer is obtained. As known, in order to rotate the polarization of the incident signal by an angle $\alpha$, when the nominal polarization is coincident with axes x as in the example depicted in Fig. 1, polarizer P2 of Fig. 3 must be rotated by an angle $\beta$ equal to $\alpha/2$. According to relation 7), it is necessary to locate the pair of slots A, A' of Fig. 2 at an angle $\varphi$ exactly equal to $\alpha/2$, in order to avoid error contributions at the outputs connected to guides 3 and 4 of block PR of Fig. 3.

Block SE is in fact a servo-drive mechanism of mechanical or electromechanical type, which receives through connection 7 the information relative to the rotation $\beta$ of polarizer P2 and converts it into a rotation command it sends to block PR through connection 2. The rotation of polarizer P2 can be operated either manually or through a local or remote electric control. Obviously the servo-drive mechanism SE is put off in case of circularly polarized radio-beacon.

The block denoted by EL will be now described in connection with the detailed block diagram of Fig. 4. It is a processing system of the extracted signals, whose proposed structure is partly already known to the skilled in the art, and which is here briefly summarized for describing more completely the tracking system object of the invention. As it can be observed at a first glance in the drawing, the structure of the system is perfectly symmetrical with respect to a horizontal median line, that is why the following considerations will concern the only upper half.

The radio frequency signal of the kind defined in relations 1) or 2) appears at port 3 and is amplified through a suitable amplifier A1; then it is converted to a generic intermediate frequency through a converter M1 that receives the radio-beacon signal from waveguide 19 and the signal of local oscillator OL of guide 14, and sends the intermediate frequency signal, through a connection in coaxial cable 20, to a second amplifier A2. The amplified signal is sent through connection 21 to another converter M2 for being multiplied by the isofrequencial signal, of the type defined in relations 3) or 4), present on connection 17. One of said signals designed to correct antenna positioning is present at the output of M2 on connection 11.

The isofrequencial signal on connection 17 is obtained from the conversion, operated by converter M5, of the radio-frequency signal extracted by means of connection 13 after the low noise preamplifier of the receiver. The product of the last radio frequency signal by the same signal of local oscillator generated by OL is effected in M5, so as to keep the equality of the intermediate frequencies on conductors 21 and 17.

Block DP is a usual power divider, which divides the power associated to the intermediate frequency signal coming from M5 through connection 16 into two equal parts on two branches 15 and 18.

The signal outgoing from DP reaches a variable phase-shifter S1, that, during the tuning of the system, determines the presence at output 11 of the required signal, just as defined in relations 6) or 8), thus realizing the phase conditions expressed in relations 3) and 4).

As to the lower half of the structure depicted in the drawing, the blocks denoted by A3, M3, A4, M4, S2 correspond respectively, to the described blocks A1, M1, A2, M2, S1 both as structure and operation. References 4 and 12 denote the input and output ports as in Fig. 3.

### Claims

1. Method of tracking an object (P) radiating a circularly or linearly polarized (E) electromagnetic signal by current re-adjustment of an antenna positioning to a pointing direction by means of correction

6

signals ($u'_{1c}$, $u'_{2c}$, $u''_{1l}$, $u''_{2l}$), the antenna being located in the origin of a Cartesian orthogonal reference system (x, y, z) having a first axis (x) parallel to the horizontal plane, a second axis (y) upward directed and a third axis (z) coincident with the maximum sensitivity direction and the object (P) position being determined by the first and a second angular coordinates ($\theta$, $\phi$) measured with respect to said third axis (z) and to said first axis (x) on the plane containing said first and second axes respectively, wherein the signals associated to the mode of propagation in guide TE21 are extracted by means of two pairs of longitudinal (A, A', B, B') slots placed on two planes passing through the axis of the waveguide in which they are cut and forming together an angle of $\pi/4$, the plane passing through the first pair (A, A') of slots defining a first angle ($\varphi$) with respect to a plane containing said first and third axes (x, z) and wherein the signals relating to the slots of the same pair are first subtracted from one another, this method being characterized in that the resulting difference signals ($u_{1l}$, $u_{2l}$, $u_{1c}$, $u_{2c}$), having the expressions:

$$u_{1l} = -K_1 v \, \sin(\phi - 2\varphi + \alpha) \, \cos(\omega t + \delta)$$

$$u_{2l} = K_1 v \, \cos(\phi - 2\varphi + \alpha) \, \cos(\omega t + \delta)$$

in case of linear polarization, and

$$u_{1c} = -K_2 v \, \cos(\omega t + \phi - 2\varphi + \gamma)$$

$$u_{2c} = -K_2 v \, \sin(\omega t + \phi - 2\varphi + \gamma)$$

in case of circular polarization, where $\alpha$ is a second angle comprised between the polarization plane of the electromagnetic signal and the plane comprising said first and third axes (x, z), $K_1$ and $K_2$ are multiplicative constants, $\delta$ and $\gamma$ are reference phases, are, in case of circular polarization, directly utilized for a subsequent multiplication and, in case of linear polarization, are equally utilized after having made said first angle ($\varphi$) to be equal to half of said second angle ($\alpha$), and then the obtained signals are multiplied by a signal ($u_{rl}$, $u_{rc}$) having the expressions:

$$u_{rl} = \cos(\omega t + \delta)$$

in case of linear polarization and

$$u_{rc} = \cos(\omega t - 2\varphi + \pi/2 + \gamma)$$

in case of circular polarization, where $\omega$ is the same frequency of said obtained signals, and the phase angle is made equal to that of the difference signals, apart from said second angular coordinate ($\phi$) in case of circular polarization by an initial adjustment, so obtaining correction signals ($u'_{1l}$, $u'_{2l}$, $u'_{1c}$, $u'_{2c}$) having the expressions:

$$u'_{1c} = -K'_2 v \, \sin\phi$$

$$u'_{2c} = K'_2 v \, \cos\phi$$

in case of circular polarization and

$$u''_{1l} = -K'_1 v \, \sin\phi$$

$$u''_{2l} = K'_1 v \, \cos\phi$$

in case of linear polarization, where $K'_1$ and $K'_2$ are multiplicative constants.

2. Method according to claim 1, characterized in that the equality of said first angle ($\varphi$) with half said second angle ($\alpha$) is obtained by operating a first rotation of said planes (AA', BB') placed at 45° from one another about said axis of the guide.

3. Method according to claim 2, characterized in that said first rotation is slaved to a second rotation ($\beta$) carried out by a device (SE) which makes the polarization of the electromagnetic TE11 signal parallel to said plane comprising said two axes (x, z) of the reference system.

4. Tracking system of an object radiating a circularly or linearly polarized electromagnetic signal, able to implement the method of claim 3, characterized in that it comprises:

— a directional antenna feed (IL) able to pick up said electromagnetic signal;
— an extractor (PR) associated to said feed and free to rotate about its axis, the extractor consisting of a circular waveguide having a diameter so dimensioned as to allow the propagation of mode TE21, in which waveguide said pairs of slots (A, A', B, B') are cut, and of two magic T circuits (T1, T2) whose inputs are coupled to said slots and whose "difference" outputs provide said difference signals;

— a polarizer at 90° (P1) associated to said circular waveguide and propagating the only TE11 mode, which polarizer is able to convert the circular polarization of this incoming TE11 mode into a linear polarization;

— a polarizer at 180° (P2) associated to said polarizer at 90° and free to rotate about its axis, so as to make the linear polarization of the signal at the input to coincide with the polarization wanted at the input of the subsequent block;

— a mode transducer (OMT) associated to said polarizer at 180° (P2), with the outputs associated respectively to the receiver and transmitter of the ground stations interested in the tracking;

— a servo mechanism (SE), able to determine a rotation of said extractor (PR) about its axis by the first angle ($\varphi$) equal to the angle ($\beta$) by which said polarizer at 180° (P2) is made to rotate, in order to give rise, in case of linear polarization, to the maximum power transfer to said mode transducer;

— a processing system (EL), in which said difference signals are first converted to an intermediate frequency by means of a locally-generated signal and then multiplied by a signal ($u_{rl}$, $u_{rc}$) having the same intermediate frequency and phase angle, obtained by mixing of the same electromagnetic signal coming from said radiating object with said locally-generated signal, the signals obtained from the multiplication being the correction signals for the antenna positioning.

## Patentansprüche

1. Verfahren zum Verfolgen eines ein zirkular oder linear polarisiertes (E) elektromagnetisches Signal abstrahlenden Objekts (P) durch laufende Nachjustierung einer Antennenstellung in eine Zeigerichtung mit Hilfe von Korrektursignalen ($u'_{1c}$, $u'_{2c}$, $u''_{1l}$, $u''_{2l}$), wobei man die Antenne im Ursprung eines kartesischen orthogonalen Bezugssystems (x, y, z) mit einer ersten Achse (x), die parallel zur horizontalen Ebene verläuft, einer zweiten Achse (y), die aufwärts gerichtet ist, und einer dritten Achse (z), die mit der Richtung der maximalen Empfindlichkeit zusammenfällt, anordnet und die Stellung des Objekts (P) durch erste und zweite Winkelkoordinaten ($v$, $\phi$) bestimmt, die man in Bezug zur dritten Achse (z) und zur ersten Achse (x) auf der die erste bzw. die zweite Achse enthaltenden Ebene mißt, und die mit dem Modus TE21 im Wellenleiter fortschreitenden Signale mit Hilfe zweier Paare längsverlaufender Schlitze (A, A', B, B') extrahiert, welche in zwei durch die Achse des Wellenleiters, in den sie geschnitten sind, verlaufenden Ebenen liegen, die gegeneinander einen Winkel von $\pi/4$ bilden und von denen die durch die beiden ersten Schlitze (A, A') verlaufende Ebene in Bezug zur die erste und die dritte Achse (x, z) enthaltenden Ebene einen ersten Winkel ($\varphi$) begrenzt, und man die auf die Schlitze des selben Paars bezogenen Signale zuerst voneinander subtrahiert, dadurch gekennzeichnet, daß man die resultierenden Differenzsignale ($u_{1l}$, $u_{2l}$, $u_{1c}$, $u_{2c}$), die im Fall linearer Polarisation den folgenden Ausdrücken genügen:

$$u_{1l} = -K_1 v \, \sin(\phi - 2\varphi + \alpha) \, \cos(\omega t + \delta)$$

$$u_{2l} = K_1 v \, \cos(\phi - 2\varphi + \alpha) \, \cos(\omega t + \delta)$$

und im Fall zirkularer Polarisation folgenden Ausdrücken genügen:

$$u_{1c} = -K_2 v \, \cos(\omega t + \phi - 2\varphi + \gamma)$$

$$u_{2c} = -K_2 v \, \sin(\omega t + \phi - 2\varphi + \gamma)$$

wobei $\alpha$ ein zweiter Winkel ist, der zwischen der Polarisationsebene des elektromagnetischen Signals und der die erste und die dritte Achse (x, zy) enthaltenden Ebene liegt, und $K_1$ und $K_2$ multiplikative Konstanten und $\delta$ und $\gamma$ Bezugsphasen sind, im Fall zirkularer Polarisation unmittelbar für eine nachfolgende Multiplikation und im Fall linearer Polarisation, nachdem der erste Winkel ($\varphi$) gleich der Hälfte des zweiten Winkels ($\alpha$) gemacht worden ist, in gleicher Weise verwendet und dann die erhaltenen Signale durch ein Signal ($u_{rl}$, $u_{rc}$) mit folgendem Ausdruck multipliziert:

$$u_{rl} = \cos(\omega t + \delta)$$

im Fall linearer Polarisation und

$$u_{rc} = \cos(\omega t - 2\varphi + \pi/2 + \gamma)$$

im Fall zirkularer Polarisation, wobei $\omega$ die selbe Frequenz des erhaltenen Signals ist, und man den Phasenwinkel gleich dem des Differenzsignals, außer von der zweiten Winkelkoordinate ($\phi$) in Fall zirkularer Polarisation, durch anfängliche Justierung macht, so daß man Korrektursignals ($u'_{1l}$, $u'_{2l}$, $u'_{1c}$, $u'_{2c}$) mit den Ausdrücken erhält:

**0 010 774**

$$u'_{1c} = -K'_2 v \, \sin\phi$$

$$u'_{2c} = K'_2 v \, \cos\phi$$

im Fall zirkularer Polarisation, und

$$u''_{1l} = -K'_1 v \, \sin\phi$$

$$u''_{2l} = K'_1 v \, \cos\phi$$

im Fall linearer Polarisation, wobei $K'_1$ und $K'_2$ multiplikative Konstanten sind.

2. Verfahren nach Anspruch 1, dadurch gekennzeichnet, daß man die Winkelgleichheit zwischen dem ersten Winkel ($\varphi$) und dem halben zweiten Winkel ($\alpha$) dadurch herstellt, daß man eine erste Verdrehung der gegeneinander unter 45°˙angeordneten Ebenen (AA', BB') um die Achse des Wellenleiters bewirkt.

3. Verfahren nach Anspruch 2, dadurch gekennzeichnet, daß man die erste Verdrehung an eine zweite Drehung ($\beta$) kettet, die von einer Vorrichtung (SE) ausgeführt wird, die die Polarisation des elektromagnetischen TE11-Signals parallel zu der die beiden Achsen (x, z) des Bezugssystems enthaltenden Ebene macht.

4. System zum Verfolgen eines ein zirkular oder linear polarisiertes elektromagnetisches Signal abstrahlenden Objekts, geeignet zur Durchführung des Verfahrens nach Anspruch 3, gekennzeichnet durch:

— eine das elektromagnetische Signal aufnehmende Richtantennenspeisung (IL);
— einen dieser Speisung zugeordneten, frei um seine Achse verdrehbaren Extraktor (PR), der aus einem zirkularen Wellenleiter, dessen Durchmesser das Fortschreiten des Modus TE21 ermöglicht und in dem die beiden Schlitze (A, A', B, B') geschnitten sind, und aus zwei Hohlleiterdifferenzübertragern (magische T) (T1, T2), deren Eingänge an die Schlitze gekoppelt sind und deren Differenz-Ausgangsklemmen die Differenzsignale abgeben, besteht;
— einen an den zirkularen Wellenleiter angeschlossenen, nur den Modus TE11 durchlassenden Polarisator bei 90° (P1), der die zirkulare Polarisation dieses eingehenden Modus TE11 in eine lineare Polarisation umwandelt;
— einen an den Polarisator bei 90° angeschlossenen Polarisator bei 180° (P2), der zur Herstellung der Übereinstimmung der linearen Polarisation des Signals am Eingang mit der am Eingang des nachfolgenden Blocks geforderten Polarisation frei um seine Achse drehbar ist;
— einen an den Polarisator bei 180° (P2) angeschlossenen Modenwandler (OMT), dessen Ausgänge an den Empfänger bzw. Sender der an der Verfolgung interessierten Bodenstation angeschlossen sind;
— einen Servomechanismus (SE), der eine Drehung des Extraktors (PR) um seine Achse um den ersten Winkel ($\varphi$) gleich dem Winkel ($\beta$), um den der Polarisator bei 180° (P2) zur Umdrehung gebracht wird, bestimmt, um im Fall der linearen Polarisation den maximalen Leistungstransfer zum Modenwandler zu bewirken;
— ein Verarbeitungssystem (EL), in dem die Differenzsignale zuerst mit Hilfe eines örtlich erzeugten Signals in eine Zwischenfrequenz umgewandelt und dann mit einem Signal ($u_{rl}$, $u_{rc}$) gleicher Zwischenfrequenz und gleichen Phasenwinkels, das durch Mischen des selben elektromagnetischen Signals, das vom strahlenden Objekt kommt, mit dem örtlich erzeugten Signal erhalten wird, multipliziert werden, wobei die durch die Multiplikation erhaltenen Signale die Korrektursignale für die Antennenstellung sind.

**Revendications**

1. Procédé de poursuite d'un objet (P) rayonnant un signal électromagnétique (E) và polarisation circulaire ou linéaire, à l'aide du réajustement ordinaire du positionnement de l'antenne vers la direction de pointage par des signaux de correcton ($u'_{1c}$, $u'_{2c}$, $u''_{1l}$, $u''_{2l}$), l'antenne étant positionée dans l'origine d'un système de référence orthogonal cartésien (x, y, z), ayant un premier axe (x) parallèle au plan horizontal, un deuxième axe (y) dirigé en haut, et un troisième axe (z) coincident avec la direction de sensibilité maximum et la position de l'objet (P) étant déterminée par une première et une seconde coordonnées angulaires ($\omega$, $\phi$) mesurées par rapport audit troisième axe (z) et audit premier axe (x) sur la plan comprenant lesdits premier et second axes respectivement où les signaux associés au mode de propagation en guide TE21 sont prélevés au moyen de deux paires de fentes longitudinales (A, A', B, B') situées dans deux plans passant par l'axe du guide d'onde où les fentes mêmes sont obtenues et formant un angle de $\pi/4$ entre eux, le plan qui passe à travers la première paire (A, A') de fentes définissant un premier angle ($\varphi$) par rapport avec un plan comprenant le premier et le troisième axes (x, z), et où les signaux relatifs aux fentes d'une même paire sont d'abord soustraits l'un de l'autre, ce

9

procédé étant caractérisé en ce que les signaux de différence qui en résultent, $(u_{1l}, u_{2l}, u_{1c}, u_{2c})$, ayant les expressions:

$$u_{1l} = -K_{1\theta} \sin(\phi - 2\varphi + \alpha) \cos(\omega t + \delta)$$

$$u_{2l} = K_{1\theta} \cos(\phi - 2\varphi + \alpha) \cos(\omega t + \delta)$$

lorsqu'il s'agit de polarisation linéaire, et

$$u_{1c} = -K_{2\theta} \cos(\omega t + \phi - 2\varphi + \gamma)$$

$$u_{2c} = -K_{2\theta} \sin(\omega t + \phi - 2\varphi + \gamma)$$

lorsq'il s'agit de polarisation circulaire, où $\alpha$ est un deuxième angle compris entre le plan de polarisation du signal électromagnétique et le plan comprenant lesdits premier et troisième axes (x, z), $K_1$ et $K_2$ sont des constantes multiplicatives, $\delta$ et $\gamma$ sont des phases de référence, sont, lorsqu'il s'agit de polarisation circulaire, employés directement pour une multiplication suivante, et, lorsqu'il s'agit de polarisation linéaire, sont de même utilisés après que ledit premier angle $(\varphi)$ est rendu égal à la moitié dudit second angle $(\alpha)$, et ensuite les signaux résultants sont multipliés par un signal $(u_{rl}, u_{rc})$ ayant les expressions:

$$u_{rl} = \cos(\omega t + \delta)$$

lorsqu'il-s'agit de polarisation linéaire et

$$u_{rc} = \cos(\omega t - 2\varphi + \pi/2 + \gamma)$$

lorsqu'il s'agit de polarisation circulaire où $\omega$ est une fréquence égale à celle desdits signaux résultants et l'angle de phase est rendu égal à celui des signaux de différence, sauf ladite deuxième coordonnée angulaire $(\phi)$ lorsqu'il s'agit de polarisation circulaire, au moyen d'un arrangement initial, obtenant ainsi des signaux de correction $(u'_{1l}, u'_{2l}, u'_{1c}, u'_{2c})$, ayant les expressions suivantes:

$$u'_{1c} = -K'_{2\theta} \sin\phi$$

$$u'_{2c} = K'_{2\theta} \cos\phi$$

lorsqu'il s'agit de polarisation circulaire, et

$$u''_{1l} = -K'_{1\theta} \sin\phi$$

$$u''_{2l} = K'_{1\theta} \cos\phi$$

lorsqu'il s'agit polarisation linéaire, où $K'_1$ et $K'_2$ sont des constantes multiplicatives.

2. Procédé selon la revendication 1, caractérisé en ce que l'égalité de ce premier $(\varphi)$ avec la moitié de ce second angle $(\alpha)$ est obtenue en effectuant une première rotation desdits plans (AA', BB') placés à 45° entre eux autour dudit axe du guide.

3. Procédé selon la revendication 2, caractérisé en ce que ladite première rotation est asservie à une seconde rotation $(\beta)$ effectuée au moyen d'un dispositif (SE) qui rend la polarisation du signal électromagnétique TE11 parallèle audit plan comprenant lesdits deux axes (z, x) du système de référence.

4. Système de poursuite d'un objet rayonnant un signal électromagnétique à polarisation circulaire ou linéaire apte à réaliser le procédé selon la revendication 3, caractérisé en ce qu'il comprend:

— un corner (IL) d'antenne directionnelle apte à recueillir ce signal électromagnétique;
— un coupler (PR) connecté à ce corner et libre de tourner autour de son axe, consistant et un guide d'onde circulaire, de diamètre tel qu'il permet la propagation du mode TE21 et dans lequel il y a cette pairs de fentes (A, A', B, B de deux circuits T magiques (T1, T2), dont les entrées sont couplées à ces fentes et dont les sorties "différences" fournissent lesdits signaux de différence;
— un polariseur à 90° (P1), connecté audit guide d'onde circulaire et apte à propager seulement le mode TE11, qui convertit la polarisation circulaire du mode TE11 en entrée dans une polarisation linéaire;
— un polariseur à 180° (P2), connecté audit polariseur à 90° et libre de tourner autour de son axe, de façon à rendre la polarisation linéaire du signal en entrée coïncident avec la polarisation désirée à l'entrée du bloc suivant;

— un séparateur de mode (OMT), connecté à ce poloariseur à 180° (P2) dont les sorties sont respectivement connectées au récepteur et au transmetteur de la station terrienne intéressée à la poursuite;

— un servomécanisme (SE), apte à provoquer une rotation dudit coupler (PR) autour de son axe d'un premier ($\varphi$) égal à l'angle ($\beta$) de rotation dudit polariseur à 180° (P2) pour obtenir dans le cas de polarisation linéaire le transfère de puissance le plus élevé vers ledit séparatuer de mode;

— un système d'élaboration (EL), où lesdits signaux de différence sont convertis d'abord à une fréquence intermediaire au moyen d'un signal engendré localement et ensuite ils sont multipliés par un signal ($u_{rl}$, $u_{rc}$) de la même fréquence intermédiaire et du même angle de phase, obtenu par mixage du signal électromagnétique provenant dudit objet rayonnant avec ledit signal engendré localement, le signaux obtenus de la multiplication étant les signaux de correction de la position de l'antenne.

**0010774**

FIG: 3

FIG. 4

1

FIG.1

FIG.2